(19) Europäisches Patentamt
European Patent Office
Office européen des brevets

(11) Publication number: **0 044 911**
**B1**

(12) # EUROPEAN PATENT SPECIFICATION

(45) Date of publication of patent specification: **25.06.86**

(21) Application number: **81103640.9**

(22) Date of filing: **12.05.81**

(51) Int. Cl.[4]: **G 02 B 1/04**, C 08 L 69/00, B 29 D 11/00, G 02 C 7/02, C 08 K 5/19

(54) **Infrared absorbing polycarbonate eye protective lens.**

(30) Priority: **14.07.80 US 167910**
**10.02.81 US 233278**

(43) Date of publication of application:
**03.02.82 Bulletin 82/05**

(45) Publication of the grant of the patent:
**25.06.86 Bulletin 86/26**

(84) Designated Contracting States:
**AT CH DE FR GB IT LI NL SE**

(56) References cited:
**US-A-3 631 147**

**H.SCHNELL: "Chemistry and physics of polycarbonates", vol. 9, 1964, Polymer Reviews, Interscience Publischers, New York (USA);**

(73) Proprietor: **AMERICAN CYANAMID COMPANY**
**1937 West Main Street P.O. Box 60**
**Stamford Connecticut 06904 (US)**

(72) Inventor: **Tucker, Robert J.**
**216 Seymour Road**
**Hackettstown New Jersey 07840 (US)**
Inventor: **White, Willard C.**
**7 Hillock Court**
**Huntington New York 11743 (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 911 B1

**Description**

The present invention relates to near infrared-absorbing polycarbonate eye protective lenses as claimed in claim 1. More particularly, it relates to a composition for, and a method of preparation of, a polycarbonate eye protective lens, having near infrared absorbing properties, comprising a polycarbonate resin having a meltflow value of about 12 to 120 and is substantially free of acidic and basic impurities and an infrared-absorbingly effective amount of a a bis(p-dialkylaminophenyl) [N,N-bis(p-dialkylaminophenyl)-p-aminophenyl]-aminium salt (I)

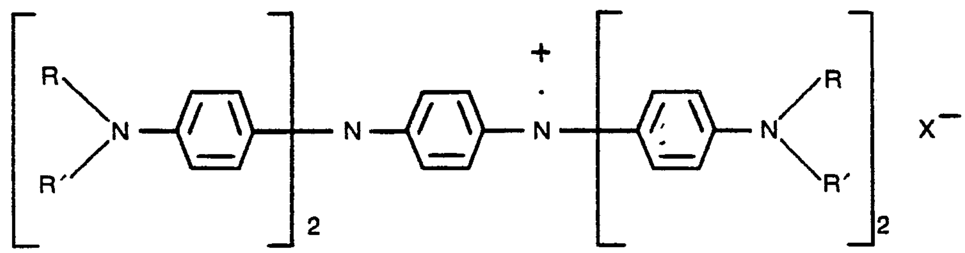

wherein R and R′ represent lower ($C_1$—$C_4$) alkyl groups and $X^-$ is an anion.

Suitable eye protective lenses are essential for various purposes, such as welding goggles, to protect against glare from arc welding, torch burning, and the like. Such lenses must filter out or absorb invisible but harmful radiation, such as the near infrared components of the incident radiation. Nevertheless, they must permit an adequate tranmission of the visible components of the incident radiation. Moreover, to be commercially useful, they must have an adequately long service life before excessive degradation of the components thereof by the incident radiation, such as by ultraviolet of light.

Glass eye protection lenses are relatively easy to make and are readily available. Glass lenses, however, are heavy, and they are quite susceptible to scratching and pitting. As a result, they are subject to reduced vision and loss of eye protection. Moreover, pitting causes a loss of impact resistance. The American National Standards Institute (ANSI) (Standard Z87.1—1979) recommends that glass lenses be replaced when pitted.

Polycarbonate is a very useful plastic substrate for eye protective lenses, exhibiting good optical properties and impact resistance. Also polycarbonates may be readily made mar resistant by the application of various mar-resistant coatings. Heretofore, however, it has not been possible to make polycarbonate lenses, having near infrared absorbing properties, because it has not been possible to incorporate infrared-absorbing compounds into the substrate. The American National Standards Institute presently does not recommend the use of anti-glare polycarbonate lenses for the aforementioned welding applications, because of this lack of infrared absorption.

The difficulty in making near infrared-absorbing polycarbonate lenses has been twofold. Firstly, the processing temperatures of 288—357°C (550—675°F) of polycarbonates, which usually have meltflow values (ASTM D—1238) of about 2 to 9, have been too high for the infrared absorber compounds to survive processing. Secondly, most polycarbonates have contained basic or acidic impurities which have destroyed the infrared absorbers by interaction therewith.

The present invention provides a means for the preparation of eye protective polycarbonate lenses which meet or exceed the requirements of the American National Standards Institute. In accordance with the invention, a polycarbonate resin is utilized which has a meltflow value of about 12 to 120 and which is substantially free of acidic or basic impurities. Polycarbonate resins having these characteristics may be processed at temperatures of 248—288°C (480—550°F), at which the infrared absorbing compounds (I) are thermally stable.

The polycarbonate resins, useful in the present invention, may be homopolymers or copolymers so long as they meet the requirements set forth above. An example of a suitable polycarbonate resin is Marlon® Polycarbonate M—39 (Mobay).

The infrared absorber compounds, useful in the present invention, are bis(p-dialkylaminophenyl) [N,N-bis-(p-dialkylaminophenyl)-p-aminophenyl]aminium salts, represented by (I), which are readily prepared by the oxidation of N,N,N′,N′-tetraarylenediamines with silver salts, as described in U.S Patent 3,251,881. Suitable silver salts are those soluble in acetone or other organic solvent medium. The anion of the silver salt provides the anion ($X^-$) of the aminium salt. Silver salts of halogen-containing acids are preferred and include the perchlorate ($ClO_4^-$), hexafluoroantimonate ($SbF_6^-$), hexafluoroarsenate ($AsF_6^-$), fluoroborate ($BF_4^-$), trichloroacetate ($CCl_2CO_1^-$), trifluoroacetate ($CF_3CO_2^-$), and the like. Other suitable silver salts include picrates, benzenesulfonates, ethanesulfonates, etc. The preferred infrared absorber compound for the purposes of the present invention is bis(p-di-n-butylaminophenyl)-[N,N-bis(p-di-n-butylaminophenyl)-p-aminophenyl)aminium hexafluoroantimonate (II)

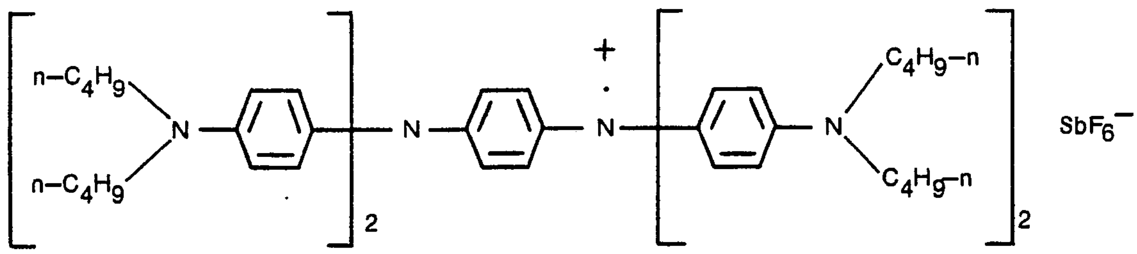

Alternatively but preferaby the infrared absorber is prepared in situ in the polymer in accordance with U.S. 3,631,147 by reacting equimolar amounts of a diimonium salt of the formula

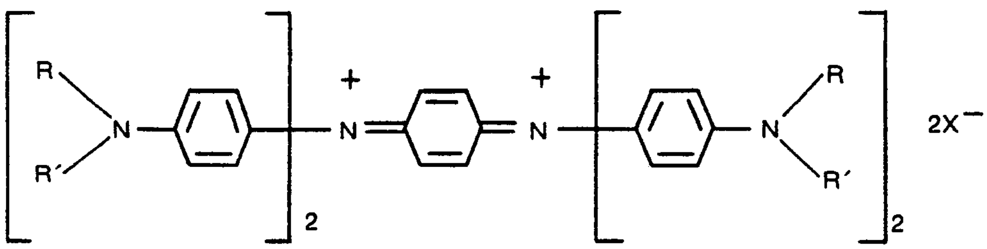

with a polyamine of the formula

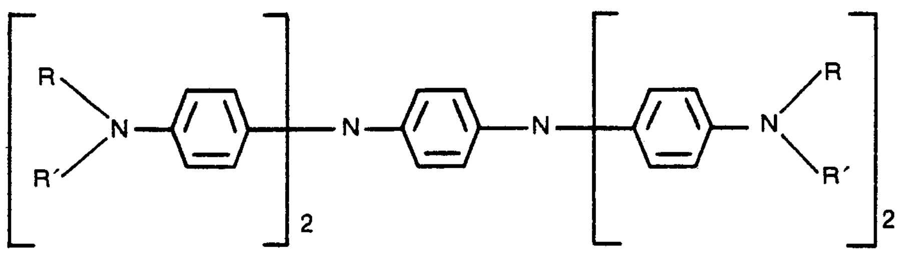

wherein R and R′ are individually $C_1$—$C_4$ alkyl groups and $X^-$ is an anion. Exemplary anions include perchlorate, hexafluoroantimonate, hexafluoroarsenate, fluoroborate, trichloroacetate, trifluoroacetate, picrate, benzenesulfonate, ethanesulfonate, phosphate, sulfate, chloride and the like.

Similar suitable infrared absorber compounds are described in U.S. Patents 3,251,881; 3,484,467; 3,575,871; and 3,670,025.

In principle the lenses will permit varying amounts of visible transmission while meeting the required absorption of both infrared and ultraviolet radiation. The degree of visible transmission is related to the shade of the lens, which may vary from about 1.2 (light) to 14 (very dark). Shade of the lens is related to the optical density by the formula:

$$\text{optical density (O.D.)} = \frac{3}{7}[\text{Shade No.} - 1]$$

$$\text{where optical density} = \log \frac{100}{T} \text{ and } T = \%\text{ transmittance}$$

In the above shade range, percent transmittance varies from about 82% (shade 1.2) to .00027% (Shade 14). While the invention is applicable to the preparation of lenses covering the entire range of shades, it is preferred to prepare lenses in the range of about 1.7 to 3 (55 to 8.5% visible transmittance). The maximum permissible transmittance of infrared radiation in the region 700—2800 nanometers, in accordance with the American National Standard Z87.1—1979, varies from 25% for a shade 1.5 lens to 0.3% for a shade 14 lens.

The composition will generally contain an ultraviolet ray absorber compound to protect the infrared absorber from deterioration and to protect the eye from incident ultraviolet radiation. In the following example, 2,4-diacetoxybenzoic acid was used, although the particular ultraviolet absorber used is not critical and does not constitute a critical feature of the invention. Any UV absorber which is compatible with the substrate and which provides the desired degree of absorption of ultraviolet radiation may be used.

The lenses of the present invention are preferably green shade. This may be accomplished by the incorporation of a green dye such as C.I. Acid Green 25. The particular dye used is not critical, nor is the

color of the lens, it being within the skill of the art to determine suitable dyes or colors. Green shade lenses are merely conventional.

Green shade polycarbonate lenses are made, in accordance with the present invention, by the incorporation into the polycarbonate substrate of a mixture of an infrared absorber, an ultraviolet ray absorber, and a dye in conventional proportions, as shown in the accompanying example. The shade of the lens, in general, is determined by the amount of the mixture which is incorporated into the substrate; larger amounts are added for darker shades. The particular combination used is not critical and will depend on the particular infrared absorber, UV ray absorber, and dye used. The preferred infrared absorber is particularly suitable because of its thermal stability under processing conditions.

Polycarbonate lenses are attractive because of their light weight and because of the inherent excellent impact resistance of the polymer. Another attractive feature of polycarbonate lenses is the ability to render them mar resistant by application of a mar-resistant coating. This can be accomplished by a number of means. Suitable mar-resistant coatings are described in U.S. Patent Nos. 4,017,456; 4,018,941; 4,021,409.

The lenses may be made in conventional manner by dry blending the additive mixture with the polycarbonate resin (granular) followed by extrusion at 248—288°C (480—550°F) and pelletizing. The dried pellets are then conventionally injection molded at 248—288°C (480—550°F) into lenses of the desired shape and thickness, usually round and about 3,2 mm (125 mils). The lenses may then be cleaned and provided with a mar-resistant coating, as described in the aforementioned patents.

The following example is illustrative of the present invention.

Example 1

Infrared Absorbing Polycarbonate Eye Protective Lens

To 100 pounds of pulverized polycarbonate (Marlon® M—39; Mobay), having a meltflow value of 19, was added 42 grams of a mixture containing 21.09 grams of N,N,N'N'-tetrakis(p-dibutylaminophenyl)-p-benzoquinonebis(imoniumhexafluoroantimonate), 13.95 grams of N,N,N'N'-tetrakis(p-dibutylaminophenyl)-p-phenylene diamine, 6.03 grams of 2,4-diacetoxybenzoic acid, and 0.92 gram of C.I. Acid Green 25. The mixture was blended and extruded at 248—288°C (480—550°F) and pelletized. The dried pellets were then injection molded at 248—288°C (480—550°F) into 3,2 mm (125-mil) thick lenses having a green shade of 2.0 (29—43% luminous transmittance). The lenses exhibited excellent ultraviolet ray and infrared absorption and melt or exceeded the requirements of ANSI Z87.1-1979 for polycarbonate eye protective lenses. A transmittance curve for the lens is shown in Figure 1.

Example 2

The procedure of Example 1 is repeated using 35.04 grams of bis(p-dibutylaminophenyl) [N,N-bis(p-di-butylaminophenyl)-p-aminophenyl]aminium hexafluoroantimonate in place of the combination of the iminium compound and the diamine.

**Claims**

1. An infrared absorbing eye protective lens comprising a polycarbonate resin and an effective infrared-absorbing amount of a bis-(p-dialkylaminophenyl) [N,N-bis(p-dialkylaminophenyl)p-aminophenyl]aminium salt represented by the formula:

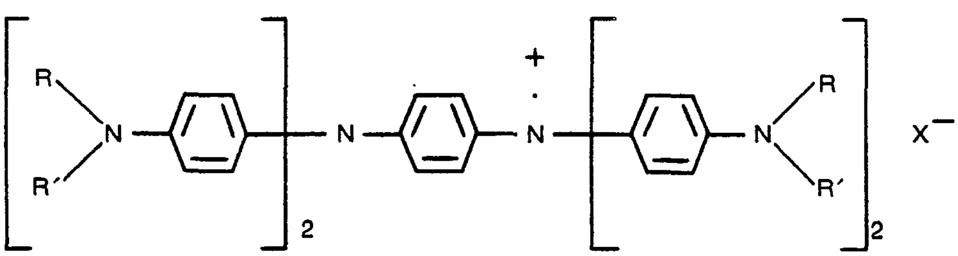

wherein R and R′ are individually $C_1$—$C_4$ alkyl groups and $X^-$ is an anion selected from perchlorate, hexafluoroantimonate, hexafluoroarsenate, fluoroborate, trichloroacetate and trifluoroacetate; said lens exhibiting a transmittance of infrared radiation in the region 700 to 2800 nanometers not exceeding 25 percent, and having a luminous transmittance of from about .00027 to about 82 percent, and wherein the lens optionally contains an ultraviolet ray absorber and/or a green dye, characterized in that the polycarbonate resin has a meltflow value of about 12 to 120 and is substantially free of acidic and basic impurities.

2. The lens of Claim 1 wherein said aminium salt is bis(p-di-n-butylaminophenyl) [N,N-bis(p-di-n-butylaminophenyl)-p-aminophenyl]aminium hexafluoroantimonate.

3. The lens of Claim 1 or Claim 2 wherein said ultraviolet ray absorber compound is present and is 2,4-diacetoxybenzoic acid.

4. The lens of Claim 1 wherein said green dye is present and is C. I. Acid Green 25.

5. The lens of Claim 1 wherein the aminium salt is prepared in situ from an essentially equimolar mixture of

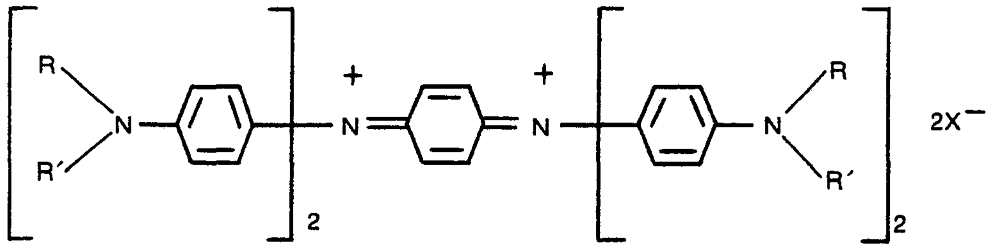

and

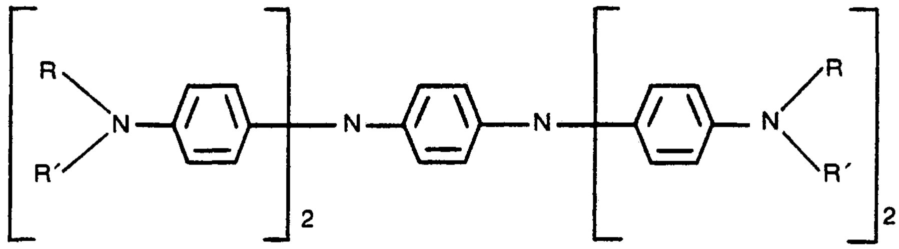

wherein R and R′ are individually $C_1$—$C_4$ alkyl groups and $X^-$ is an anion selected from perchlorate, hexafluoroantimonate, hexafluoroarsenate, fluoroborate, trichloroacetate and trifluoroacetate.

6. A composition comprising a polycarbonate resin having a meltflow value of about 12 to 120 and being substantially free of acidic and basic impurities and a bis(p-dialkylaminophenyl) [N,N-bis(p-dialkylaminophenyl)-p-aminophenyl]aminium salt of the formula

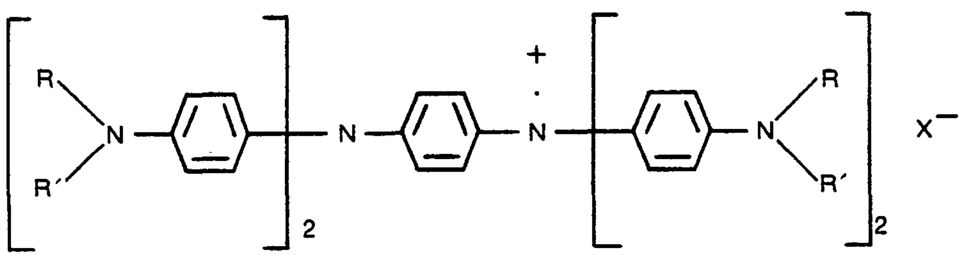

wherein R and R′ are individually $C_1$—$C_4$ alkyl groups and $X^-$ is an anion selected from perchlorate, hexafluoroantimonate, hexafluoroarsenate, fluoroborate, trichloroacetate and trifluoroacetate.

7. The composition of Claim 6 further containing an ultraviolet ray absorber compound.

8. The composition of Claim 7 wherein the ultraviolet ray absorber compound is 2,4-diacetoxybenzoic acid.

9. The composition of Claim 6 or Claim 8 wherein each R and R′ is n-butyl and X is hexafluoroantimonate.

10. The composition of Claim 6 wherein the aminium salt is prepared in situ from an essentially equimolar mixture of

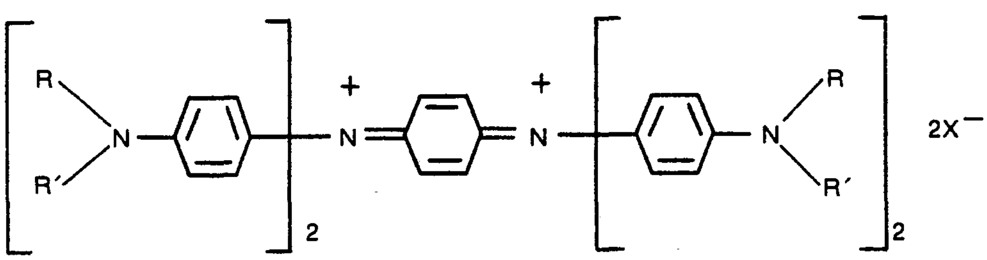

and

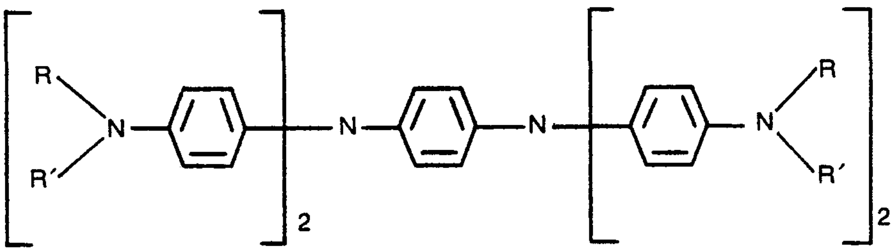

wherein R and R′ are individually $C_1$—$C_4$ alkyl groups and $X^-$ is an union selected from perchlorate, hexafluoroantimonate, hexafluoroarsenate, fluoroborate, trichloroacetate and trifluoroacetate.

**Patentansprüche**

1. Eine Infrarotabsorptions-Augenschutzlinse umfassend ein Polycarbonatharz und eine wirksame infrarot-absorbierende Menge eines Bis(p-dialkylaminophenyl)-[N,N-bis(p-dialkylaminophenyl)p-aminophenyl]-aminiumsalzes der folgenden Formel

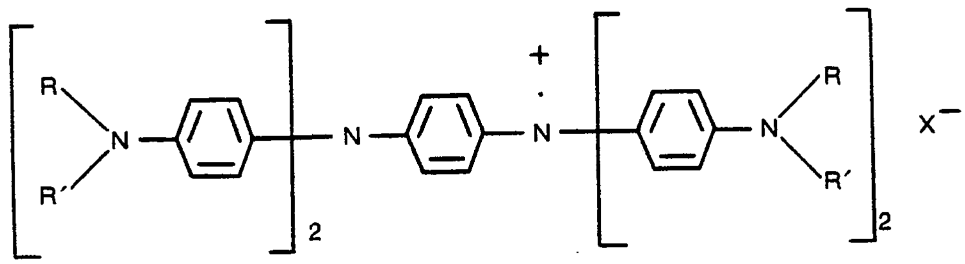

wobei R und R′ unabhängig für $C_1$—$C_4$-Alkylgruppen stehen und $X^-$ ein Anion ist, ausgewählt aus Perchlorat, Hexafluorantimonat, Hexafluorarsenat, Fluorborat, Trichloracetat und Trifluoracetat; wobei die Linse eine Durchlässigkeit für Infrarotstrahlung im Bereich 700 bis 2800 Nanometer von nicht über 25% zeigt, und mit einer Lichtdurchlässigkeit von etwa 0,00027 bis etwa 82% und wobei die Linse gegebenenfalls einen Ultraviolet strahlenabsorber und/oder einen grünen Farbstoff enthält, dadurch gekennzeichnet, daß das Polycarbonatharz einen Schmelzflußwert von etwa 12 bis 120 aufweist und im wesentlichen frei von sauren und basischen Verunreinigungen ist.

2. Linse nach Anspruch 1, wobei das Aminiumsalz Bis(p-di-n-butylaminophenyl)-[N,N-bis(p-di-n-butylaminophenyl)-p-aminophenyl]-aminium-hexafluorantimonat ist.

3. Linse nach Anspruch 1 oder Anspruch 2, wobei die Ultraviolettstrahlenabsorber-Verbindung vorliegt und es sich dabei um 2,4-Diacetoxybenzosäure handelt.

4. Linse nach Anspruch 1, wobei der grüne Farbstoff vorliegt und es sich dabei um C.I. Acid Green 25 handelt.

5. Linse nach Anspruch 1, wobei das Aminiumsalz in situ hergestellt wurde aus einem in wesentlichen äquimolaren Gemisch von

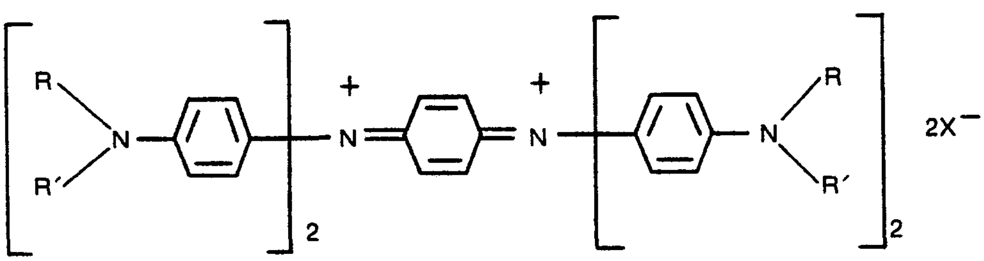

und

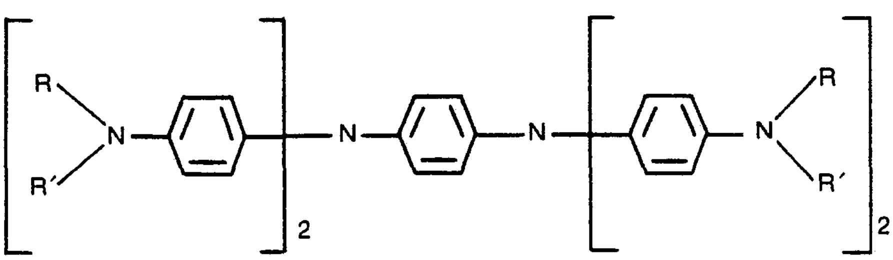

wobei R und R' unabhängig für $C_1$—$C_4$-Alkylgruppen stehen und $X^-$ für ein Anion steht ausgewählt aus Perchlorat, Hexafluorantimonat, Hexafluorarsenat, Fluorborat, Trichloracetat und Trifluoracetat.

6. Eine Masse, umfassend ein Polycarbonatharz mit einem Schmelzflußwert von etwa 12 bis 120 und im wesentlichen frei von sauren und basischen Verunreinigunaminophenyl)-p-aminophenyl]-aminiumsalz der Formel

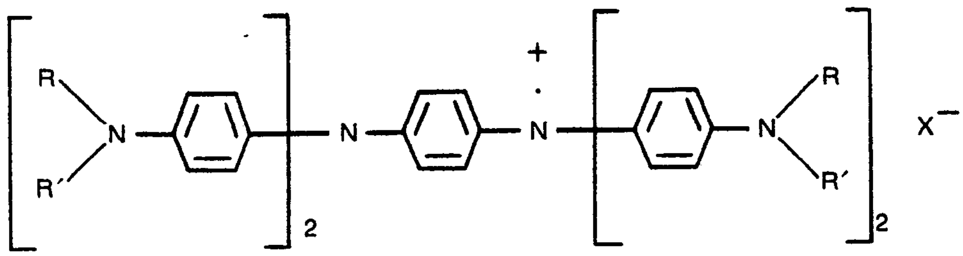

wobei R und R' unabhängig für $C_1$—$C_4$-Alkylgruppen stehen und $X^-$ für ein Anion steht, ausgewählt aus Perchlorat, Hexafluorantimonat,. Hexafluorarsenat, Fluorborat, Trichloracetat und Trifluoracetat.

7. Masse nach Anspruch 6, welche ferner eine Ultraviolettstrahlenabsorber-Verbindung enthält.

8. Masse nach Anspruch 7, wobei die Ultraviolettstrahlenabsorber-Verbindung 2,4-Diacetoxybenzosäure ist.

9. Masse nach Anspruch 6 oder 8, wobei jeweils R und R' für n-Butyl stehen und X für Hexafluorantimonat steht.

10. Masse nach Anspruch 6, wobei das Aminiumsalz in situ hergestellt wurde aus einer im wesentlichen äquimolaren Mischung von

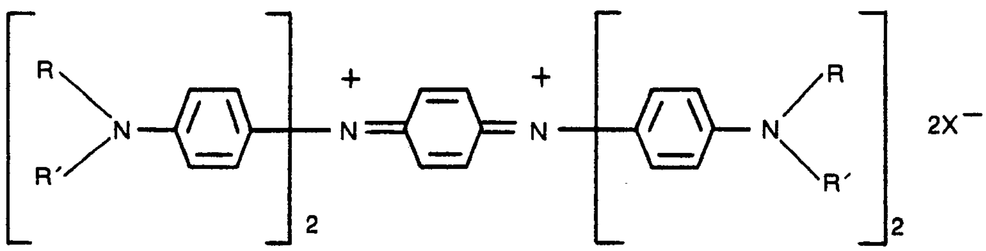

und

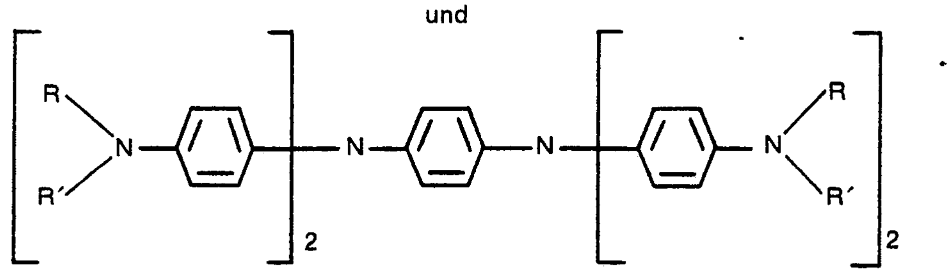

wobei R und R' unabhängig für $C_1$—$C_4$-Alkylgruppen stehen und $X^-$ für ein Anion steht, ausgewählt aus Perchlorat, Hexafluorantimonat, Hexafluorarsenat, Fluorborat, Trichloracetat und Trifluoracetat.

**Revendications**

1. Lentille de protection, pour les yeux, absorbant l'infrarouge comprenant une résine de polycarbonate et une quantité efficace pour absorber l'infrarouge d'un sel de bis(p-dialkylaminophényl)[N,N-bis(p-dialkylaminophényl)p-aminophényl]aminium représenté par la formule

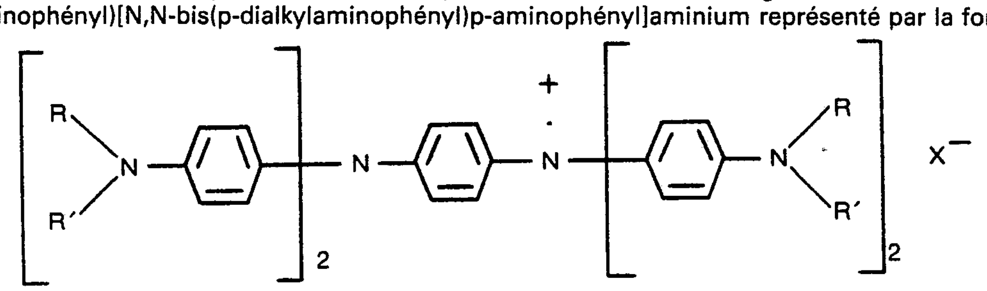

dans laquelle R et R' sont chacun des groupes alkyles en $C_1$—$C_4$ et $X^-$ est un anion choisi parmi perchlorate, hexafluoroantimoniate, hexafluoroarséniate, fluoroborate, trichloroacétate et trifluoroacétate; ladite

lentille présentant une transmission du rayonnement infrarouge dans la région de 700 à 2.800 nanomètres ne dèpassant pas 25% et ayant une transmission lumineuse d'environ 0,00027 à environ 82%, la lentille contenant éventuellement un absorbant des rayons ultraviolets et/ou colorant vert, caractérisée en ce que la résine de polycarbonate as un indice de fluidité d'environ 12 à 120 et est essentiellement dépourvue d'impuretés acides et basiques.

2. Lentille de la revendication 1, dans laquelle ledit sel d'aminium est l'hexafluoroantimoniate de bis(p-di-n-butylaminophényl)[N,N-bis(p-di-n-butylaminophényl)p-aminophényl]aminium.

3. Lentille de la revendication 1 ou de la revendication 2, dans laquelle ledit composé absorbant les rayons ultraviolets est présent et est l'acide 2, 4-diacétoxybenzoïque.

4. Lentille de la revendication 1, dans laquelle ledit colorant vert est présent et est le C.I. Acid Green 25.

5. Lentille de la revendication 1, dans laquelle le sel d'aminium est préparé in situ à partir d'un mélange essentiellement équimoléculaire de

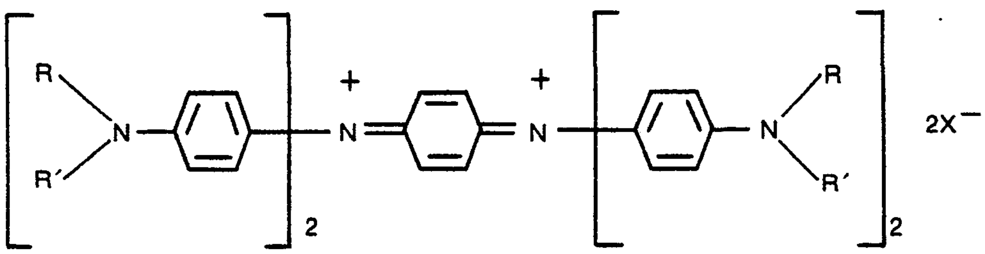

et

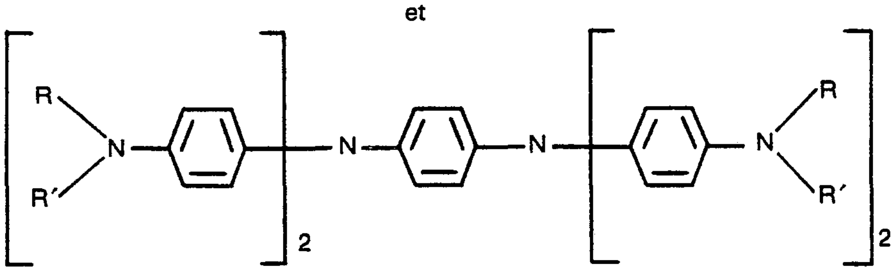

dans lesquels R et R' sont individuellement de groupes alkyles en $C_1$—$C_4$ et $X^-$ est un anion choisi parmi perchlorate, hexafluoroantimoniate, hexafluoroarséniate, fluoroborate, trichloroacétate et trifluoroacétate.

6. Composition comprenant une résine de polycarbonate ayant un indice de fluidité d'environ 12 à 120 et étant essentiellement dépourvue d'impuretés acides et basiques et un sel de bis(p-dialkylaminophényl)[N,N-bis(p-dialkylaminophényl)-p-aminophényl]aminium de formule

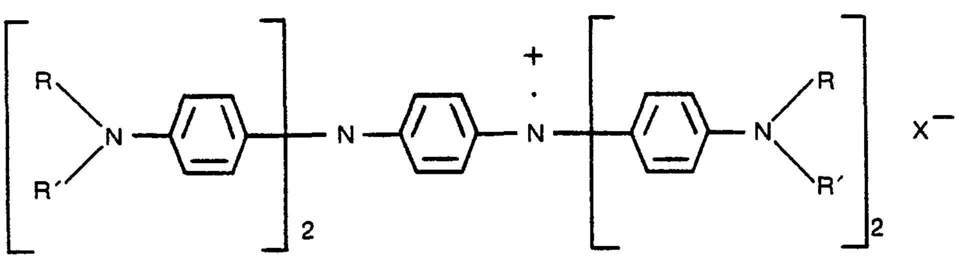

dans laquelle R et R' sont chacun des groupes alkyles en $C_1$—$C_4$ et $X^-$ est un anion choisi permi perchlorate, hexafluoroantimoniate, hexafluoroarséniate, fluoroborate, trichloroacétate et trifluoroacétate.

7. Composition de la revendication 6, contenant de plus un composé absorbant les rayons ultraviolets.

8. Composition de la revendication 7, dans laquelle le composé absorbant les rayons ultraviolets est l'acide 2,4-diacétoxybenzoïque.

9. Composition de la revendication 6 ou de la revendication 8, dans laquelle R et R' sont chacun un n-butyle et X est un hexafluoroantimoniate.

10. Composition de la revendication 6, dans laquelle le sel d'aminium est préparé in situ à partir d'un mélange essentiellement équimoléculaire de

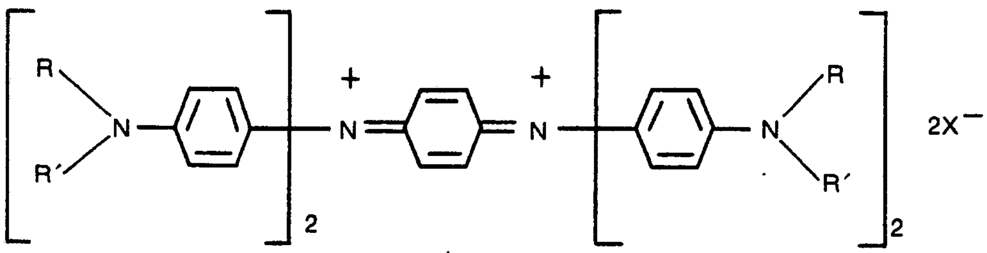

et

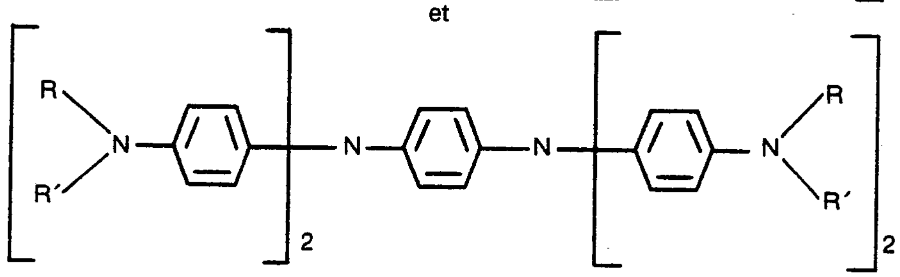

dans lesquels R et R′ sont chacun des groupes alkyles en $C_1$—$C_4$ et $X^-$ est un anion choisai parmi perchlorate, hexafluoroantimoniate, hexafluoroarséniate, fluoroborate, trichloroacétate et trifluoroacétate.

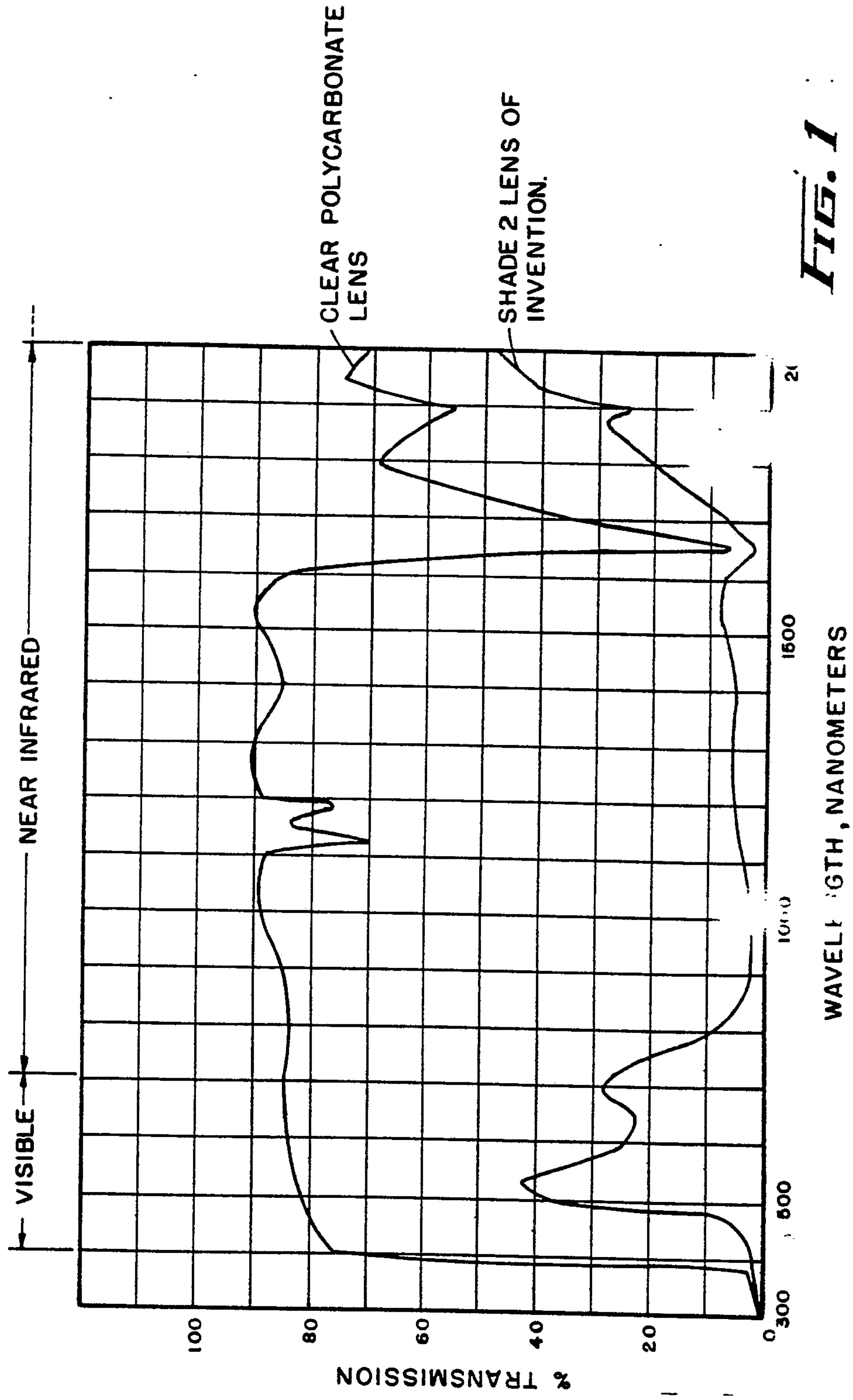
CLEAR POLYCARBONATE LENS
SHADE 2 LENS OF INVENTION.
VISIBLE
NEAR INFRARED
% TRANSMISSION
100
80
60
40
20
0
300
500
1500
NANOMETERS

FIG. 1